(19) Europäisches Patentamt
European Patent Office
Office européen des brevets

(11) **EP 4 640 482 A1**

(12) **EUROPEAN PATENT APPLICATION**

(43) Date of publication:
29.10.2025 Bulletin 2025/44

(21) Application number: 24172430.1

(22) Date of filing: 25.04.2024

(51) International Patent Classification (IPC):
*B60L 58/13* (2019.01)

(52) Cooperative Patent Classification (CPC):
H02J 7/0048; B60L 58/12; B60L 58/13;
H02J 7/00712; B60L 2240/549; H02J 2310/48

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: VOLVO TRUCK CORPORATION
405 08 Göteborg (SE)

(72) Inventors:
• ALTAF, Faisal
421 43 VÄSTRA FRÖLUNDA (SE)
• LILLMAA, Henri
46372 LÖDÖSE (SE)

• ROST, Louise
412 84 GÖTEBORG (SE)
• SINGH, Shailesh
417 47 GÖTEBORG (SE)
• PERERA, Marthrage Supun Nadeeshka
418 76 GÖTEBORG (SE)
• KALYAN, Vellanki Prasanna
721301 KHARAGPUR (IN)

(74) Representative: Kransell & Wennborg KB
P.O. Box 2096
403 12 Göteborg (SE)

Remarks:
Amended claims in accordance with Rule 137(2)
EPC.

(54) **ADAPTATION OF A STATE-OF-CHARGE (SOC) WINDOW FOR AN ENERGY STORAGE SYSTEM (ESS)**

(57) A computer system (200) for adapting a State-of-Charge (SoC) window of an Energy Storage System (ESS) is provided, including processing circuitry (210) configured to: obtain a target usable energy value for an ESS (220), and improve a matching between i) the target usable energy value and ii) a current usable energy value of the ESS in accordance with a SoC window for the ESS, by iteratively adapting the SoC window for the ESS over a plurality of iteration steps, wherein the processing circuitry is further configured to, for each iteration step, update the SoC window for the ESS with no more than a predefined maximum amount. A corresponding electric vehicle including the ESS and computer system and computer-implemented method for iteratively adapting the SoC window of the ESS are also provided.

EP 4 640 482 A1

Fig. 4

## Description

### TECHNICAL FIELD

The present disclosure relates generally to State-of-Charge (SoC) windows for Energy Storage Systems (ESS's). In particular aspects, the disclosure relates to an improved solution of how to adapt a SoC window for an ESS. The disclosure can be applied to heavy-duty vehicles, such as trucks, buses, and construction equipment, among other vehicle types. Although the disclosure may be described with respect to a particular vehicle, the disclosure is not restricted to any particular vehicle. The solution(s) envisaged herein may also be used for ESS's found in entities other than vehicles.

### BACKGROUND

An Energy Storage System (ESS) may include one or more battery packs (or at least one or more battery cells) and e.g. a Battery Management System (BMS) for controlling e.g. how power and energy are delivered to/from the ESS, as part of charging/discharging the ESS. A main function of the ESS and BMS is to receive/deliver such power and energy in a safe, robust and optimal way for a range of applications under varying operating conditions.

The usable energy in a given State-of-Charge (SoC) window is the total amount of energy (as measured in e.g. kilowatt hours, kWh, or joules, J) that is deliverable to/receivable from terminals of the ESS during charging/discharging of the ESS, while meeting certain requirements in terms of durability, safety and/or performance. The amount of usable energy is a nonlinear function of battery characteristics such as capacity, impedance, Open-Circuit-Voltage (OCV), SoC window, temperature, etc. As e.g. battery packs age, their capacities fade and their impedance increases, which may result in a fading also of the amount of usable energy over time, as a function of the State-of-Health (SoH) of the battery packs.

The present disclosure aims at providing an adaptive SoC window control strategy that at least partially mitigates some of the above-mentioned issues with contemporary technology.

### SUMMARY

According to a first aspect of the present disclosure, there is provided a computer system including processing circuitry. The processing circuitry is configured to obtain a target usable energy value for an ESS, and improve a matching between i) the target usable energy value and ii) a current usable energy value of the ESS in accordance with a SoC window for the ESS, by iteratively adapting the SoC window for the ESS over a plurality of iteration steps. The processing circuitry is further configured to, for each iteration step, update the SoC window for the ESS with no more than a predefined fixed amount. The first aspect of the disclosure may seek to solve the problem of providing a SoC window that takes into account aging of the ESS. A technical benefit may include that the SoC window may reflect a same usable energy of the ESS throughout the lifetime of the ESS (i.e. from Beginning-of-Life, BoL, to End-of-Life, EoL). Another technical benefit may include that by limiting how much the SoC window is changed with each iteration, abrupt changes to the SoC window (as noticeable to e.g. a driver) can be avoided. Yet another technical benefit of such step-wise adaptation of the SoC window may include an increase robustness against errors in the input parameters (such as the battery pack-specific SoH), as larger instantaneous errors are not propagated directly in one shot, which provides at least some filtering and mitigates the impact of e.g. larger outliers and reduces a likelihood of larger error in one step.

Optionally, in some examples, including in at least one preferred example, changing the SoC window with no more than a predefined maximum amount may include to not change a lower SoC window limit with more than a first predefined maximum amount, and/or to not change an upper SoC window limit with more than a second predefined maximum amount.

Optionally, in some examples, including in at least one preferred example, iteratively adapting the SoC window may include to determine that the current usable energy value is more than a predefined amount away from the target energy value, and in response thereto update the SoC window with no more than the predefined maximum amount.

Optionally in some examples, including in at least one preferred example, the processing circuitry may be further configured to stop the iteration in response to one or more of i) determining that the current usable energy value matches the target usable energy value and ii) determining that the current usable energy value exceeds the target usable energy value with at least a predefined buffer amount. A technical benefit may include that some "overshoot" may be allowed, i.e. a usable energy value that is somewhat above the target usable energy value and which may thus compensate for at least some potential inaccuracies and still allow to deliver at least the target usable energy of the ESS. Phrased differently, having such an additional "buffer" on top of the target usable energy value of the ESS may reduce a risk of delivering less energy than expected based on e.g. calculation inaccuracies.

Optionally, in some examples, including in at least one preferred example, the processing circuitry may be further configured to keep the lower SoC window limit at or above a minimum lower adaptation limit, and/or to keep the upper SoC window limit at or below a maximum upper adaptation limit. A technical benefit may include that under- and/or overcharging of the ESS may thus be avoided, and/or that the SoC of the ESS may be kept from reaching into regions close to under- and/or overcharging wherein the ESS ages faster, which may serve to reduce or avoid unnecessary aging of the battery pack(s) of the ESS and/or reduce or avoid the risk of e.g. fire or other failure of the battery pack(s) due to e.g. overcharging. For example, the minimum lower and maximum upper adaptation limits may correspond to lower and upper critical limits as e.g. specified by a manufacturer of the battery packs of the ESS, below and above which, respectively, discharging and charging the ESS is not recommended.

Optionally, in some examples, including in at least one preferred example, the processing circuitry may be further configured to stop the iteration in response to determining that both the lower and upper SoC window limits have reached the respective minimum lower and maximum upper adaptation limits. A technical benefit may include that the SoC window may thus be maximized without going beyond such limits, e.g. without going beyond critical limits for the battery packs of the ESS.

Optionally, in some examples, including in at least one preferred example, the processing circuitry may be further configured to keep the lower SoC window limit at or below a maximum lower adaptation limit, and/or to keep the upper SoC window limit at or above a minimum upper adaptation limit. A technical benefit may include that the adaptation of the SoC window can thus be made more flexible, to account for an undesired lack of energy or an undesired surplus of energy, and/or in that the SoC window can be both increased or decreased while also being moved up or down.

Optionally, in some examples, including in at least one preferred example, the processing circuitry may be further configured to stop the iteration in response to determining that both of lower and upper SoC window limits has reached the respective maximum lower and minimum upper adaptation limit. A technical benefit may include that the SoC window may thus be minimized without going beyond such limits.

Optionally, in some examples, including in at least one preferred example, the processing circuitry may be configured to determine the usable energy of the ESS as a sum of battery pack-specific terms. Each battery pack-specific term may include a product of i) the SoH of the battery pack, ii) a Beginning-of-Life (BoL) capacity of the battery pack, and iii) an integral of the estimated OCV of the battery pack (as a function of SoC) over the current SoC window (e.g. between the lower and upper SoC window limits). A technical benefit may include that each such term may be calculated in parallel, and e.g. in a distributed fashion. Optionally, in some examples, including in at least one preferred example, the processing circuitry may be further configured to start to iteratively adapt the SoC window in response to the ESS undergoing a charging session (e.g. in response to detecting a start of such a charging-session and/or to detecting that such a charging-session is ongoing). A technical benefit may include that adjustments to the SoC window can thus be made when e.g. a driver is less likely to notice, in order to avoid the driver noticing sudden jumps of the SoC of the ESS as presented to the driver, e.g. as part of a remaining range estimation presented to the driver.

Optionally, in some examples, including in at least one preferred example, the processing circuitry may be configured to iteratively adapt the SoC window over several charging-sessions, e.g. such that the iteration is temporarily stopped when the ESS is not charging (such as e.g. when used/discharged in a vehicle) and then continued when a new charging-session begins. A technical benefit may include that the effect of the SoC window adaptation can then be made even more less noticeable to e.g. the driver.

Optionally, in some examples, including in at least one preferred example, the processing circuitry may be configured to start to iteratively adapt the SoC window in response to replacement of at least one battery pack of the ESS (e.g. in response to detecting that at least one battery pack of the ESS has been replaced, for example due to a repair of the ESS). A technical benefit may include that the SoC window may thus be adjusted to be smaller in response to the new at least one battery pack having a higher SoH than the replaced battery pack(s), such that the usable energy of the ESS (in accordance with the adapted SoC window) thus remains the same as before the replacement.

Optionally, in some examples, including in at least one preferred example, the target usable energy value for the ESS may be predefined and fixed. For example, the target usable energy value may be an external parameter calibrated at the time of e.g. software download during vehicle production, or e.g. based on some default internal value if not calibrated specifically for each vehicle. As another example, the target usable energy value may be calculated based on for example an estimated/expected SoH at an EoL (or End-of-Safe-Life) of the ESS. Of course, although it is herein referred to a vehicle, the envisaged concept applies also to other ESS's than those found in vehicles.

Optionally, in some examples, including in at least one preferred example, the processing circuitry may be further configured to obtain an indication of an expected usage pattern for the ESS, and to determine the target usable energy value based on the obtained usage pattern. A technical benefit may include that the target usable energy value can thus be adapted to the expected need from the ESS, and be based on e.g. an expected driving pattern, driving route, and similar. Phrased differently, the solution as envisaged herein may be made "energy aware", and the SoC window may be iteratively adapted accordingly. Another technical benefit may include that the lifetime of the ESS may potentially be increased by adapting the SoC window to the expected usage pattern. For example, if the ESS is not expected to be drained with more than a certain amount of energy between charging-sessions, the target usable energy (and corresponding, adjusted SoC window) can be limited to such a certain amount of energy.

Optionally, in some examples, including in at least one preferred example, the computer system may be, or form part of, a BMS. A technical benefit may include that such a BMS may thus enjoy all of the above-mentioned advantages of such a computer system.

Optionally, in some examples, including in at least one preferred example, the processing circuitry may be further configured to control a charging and/or discharging of the ESS in accordance with the adapted SoC window for the ESS. A technical benefit may include that the ESS may thus be controlled such that it e.g. does not go beyond any of the limits specified by the adapted SoC window, and such that an experienced performance of the ESS in terms of how much energy it is capable of delivering may this remain more or less the same throughout the life of the ESS, even as the true performance of the ESS degrades with time. As an example, any entity responsible for charging and/or discharging the ESS may be caused to believe that when the SoC of the ESS reaches the lower SoC window limit, the SoC of the ESS is e.g. at zero percent. Likewise, the entity may be caused to believe that when the SoC of the ESS reaches the upper SoC window limit, the SoC of the ESS is e.g. at a hundred percent. Phrased differently, the actual SoC window (as adapted) may be rescaled before being used by other entities as part of their control operations. Such an entity therefore does not need to know about the underlying iterative adaptation of the SoC window, but may instead continue its operation as usual based on its "believed" SoC of the ESS.

According to a second aspect of the present disclosure, there is provided an electric vehicle. The vehicle may for example be a heavy-duty electric vehicle, such as a truck, bus, wheel loader, dumper, excavator, tractor, etc., or e.g. any other type of electric vehicle including e.g. marine vessels and similar. The vehicle includes an ESS including one or more battery packs, and the computer system of the first aspect (or any example thereof disclosed or discussed herein). The vehicle may thus enjoy the same advantages/benefits as described above.

According to a third aspect of the present disclosure, there is provided a computer-implemented method performed by processing circuitry, e.g. by processing circuitry of the computer system of the first aspect. The method includes obtaining a target usable energy for an electric ESS, and improving a matching between i) the target usable energy value and ii) a current usable energy value of the ESS in accordance with a SoC window for the ESS, by iteratively adapting the SoC window for the ESS over a plurality of iteration steps. Iteratively adapting the SoC window for the ESS includes, for each iteration, updating the SoC window for the ESS with no more than a predefined amount. The method of the third aspect may thus be that performed by the processing circuitry of the computer system of the first aspect (or any example thereof disclosed or discussed herein).

According to a fourth aspect of the present disclosure, there is provided a computer program including computer code that, when executed by processing circuitry of a computer system (such as that of the first aspect), causes the computer system to perform the method of the third aspect.

According to a fifth aspect of the present disclosure, there is provided a computer program product, including a non-transitory computer-readable storage medium, on which the computer program (i.e. computer code, such as computer-executable instructions) of the fourth aspect is stored.

According to a sixth aspect of the present disclosure, there is provided a non-transitory computer-readable storage medium, on which the computer program of the fourth aspect is stored.

According to a seventh aspect of the present disclosure, there is provided an electric ESS. The ESS includes one or more battery packs, and the computer system of the first aspect (or any example therefor as disclosed or discussed herein).

Optionally, in some examples, including in at least one preferred example, the computer system of the ESS may be distributed among a coordinating multi-battery pack manager and respective processing circuitry of each battery pack, wherein the processing circuitry of each battery pack is configured to calculate its corresponding battery pack-specific term. The processing circuitry of each battery pack may be, or form part of, a Battery Management Unit (BMU) of/for the battery pack. In other examples, the coordinating multi-battery pack manager may instead request the various parameters required to calculate such battery pack-specific terms from each battery pack, and handle the calculations itself.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 schematically illustrates an example of a contemporary fixed SoC window control strategy.

**FIG. 2** schematically illustrates one or more examples of a computer system for iteratively adapting a SoC window of an ESS as envisaged herein, as well as one or more examples of an ESS as also envisaged herein, according to examples of the present disclosure.

**FIG. 3** schematically illustrates a flowchart of one or more examples of a computer-implemented method of iteratively adapting a SoC window as envisaged herein, according to examples of the present disclosure.

**FIG. 4** schematically illustrates one or more examples of an iteratively adapted SoC window control strategy as envisaged herein, according to examples of the present disclosure.

**FIG. 5** schematically illustrates an example heavy-duty vehicle as envisaged herein, according to one or more examples of the present disclosure.

**FIG. 6** schematically illustrates an example ESS as envisaged herein, according to one or more examples of the present disclosure.

**FIG. 7** schematically illustrates an example computer system for implementing examples disclosed herein, according to examples of the present disclosure.

## DETAILED DESCRIPTION

The detailed description set forth below provides information and examples of the disclosed technology with sufficient detail to enable those skilled in the art to practice the disclosure.

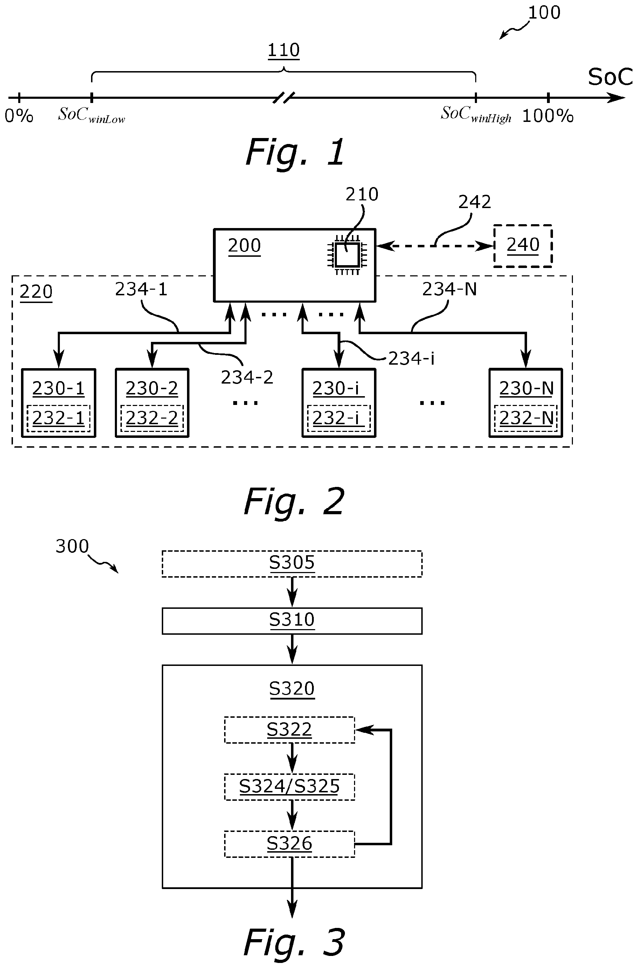

**FIG. 1** schematically illustrates an example contemporary control strategy 100 for an ESS. In the strategy 100, an assumed usable SoC window 110 of the ESS is defined to span between a lower SoC window limit $SoC_{winLow}$ and an upper SoC window limit $SoC_{winHigh}$, wherein the limits $SoC_{winLow}$ and $SoC_{winHigh}$ are kept fixed throughout the lifetime of the ESS. For example, the lower limit $SoC_{winLow}$ may be defined to be around 5-10% and the upper limit $SoC_{winHigh}$ may be defined to be around 90-95%, or similar. Avoiding deep discharge or charging of the ESS to its full capacity may at least for some battery pack types help to at least somewhat slow down the aging of the ESS. At the same time, making the usable SoC window 110 too small may cause a negative user experience as the full potential of the ESS is not used. For an electric vehicle, this may translate into a reduced maximum range and/or a reduced usable energy storage density, as part of the weight added by the battery pack(s) of the ESS will not provide any usable energy due to the assumed usable SoC window corresponding to less than a full capacity of the ESS. Consequently, how to fix the limits $SoC_{winLow}$ and $SoC_{winHigh}$ is thus often a compromise/tradeoff between expected ESS lifetime, chargeability and usable energy/performance, and similar.

For example, in case of an electric vehicle, the fixed SoC window limits $SoC_{winLow}$ and $SoC_{winHigh}$ may be defined in accordance with an expected EoL capacity of the ESS, such that a usable energy at EoL is guaranteed to be above a predefined EoL energy value, which thus results in a range of the vehicle at the EoL of the ESS also being guaranteed to be above a predefined EoL range value. However, such a control strategy may be less than optimal both from a user and mission planning perspective, as the usable energy (and range) of the ESS (and vehicle) will (monotonically) decrease with time. For example, at BoL of the ESS, the range of the vehicle will be larger than the predefined EoL range value, and will then decrease towards the predefined EoL range value as the ESS ages. Such a time-varying performance behavior may make mission planning difficult, and may in particular provide a negative user experience as the user can see the performance of the vehicle degrade with time. In addition, such a fixed SoC window control strategy may also be less than optimal from a battery aging dynamics perspective, and may even lead to a higher than necessary rate of aging of the battery pack(s) and ESS. For example, in a fixed SoC window control strategy, an upper limit of the fixed SoC window may be high in order to guarantee that a minimum available energy remains the same throughout the lifetime of the ESS. As such a high SoC is included in the fixed SoC window limit, the risk of frequently charging the ESS to such a high SoC is increased, which may lead to an accelerated aging of the ESS and its battery packs.

As will now be described in more detail with reference first to FIGS. 2 and 3 of the accompanying drawings, the present disclosure proposes to overcome some or all of the above-mentioned disadvantages with contemporary SoC window control strategies by making the SoC window adaptive and changing throughout the lifetime of the ESS. In particular, the present disclosure proposes to adapt the SoC window iteratively, where only limited corrections to one or both of $SoC_{winLow}$ and $SoC_{winHigh}$ are performed during each iteration step. In what follows, the ESS and improved SoC window control strategy will be discussed in the context of an electric vehicle, such as a heavy-duty vehicle (e.g. a truck, bus, excavator, dumper, etc.), a marine vessel, or similar. It is, however, envisaged that the ESS and improved SoC window control strategy may just as well be used also in other situations/environments not related to/including an electric vehicle.

**FIG. 2** schematically illustrates an example computer system 200 according to the present disclosure. The computer system 200 includes processing circuitry 210 that is configured to iteratively adapt a SoC window (i.e. an assumed usable SoC window) of an ESS 220, wherein the ESS 220 includes one or more battery packs. In this particular example, there are $N$ battery packs 230-1, 230-2, ..., 230-N in total, which will hereinafter jointly be referred to as battery packs 230. The battery packs 230 may be similar or different battery packs. The $i$:th battery pack of the battery packs 230 is denoted 230-i. Each battery pack 230 may, in some examples, include its own BMU, such as a BMU 232-1 for the battery pack 230-1, a BMU 232-2 for the battery pack 230-2, and so on. In general, the $i$:th battery pack 230-i may, in some examples, include a BMU 230-i.

The computer system 200 and processing circuitry 210 are configured communicate with the battery packs 230, here illustrated as arrows 234-1, 234-2, ..., 234-i, ..., 234-N, in order for e.g. the processing circuitry 210 to obtain readings of one or more parameters of each of the battery packs 230 needed to obtain e.g., for each battery pack 230-i, a battery pack-specific (current) State-of-Health $SoH_i$ and an estimated Open-Circuit-Voltage as function of SoC, $OCV_i(SoC)$. Such parameter values may e.g. be obtained directly from each battery pack as part of such readings (e.g. from the corresponding BMU 232-i, if available) and/or e.g. be calculated/determined by the processing circuitry 210 itself based on such readings. For example, the State-of-Health $SoH_i$ may be determined/estimated using any suitable algorithm/-method, based on readings of one or more parameters required for such determination/estimation. Likewise, the Open-Circuit-Voltage (as function of SoC) $OCV_i(SoC)$ may be determined using e.g. a stored mapping between OCV and SoC, that may for example have been obtained using laboratory experiments, based on a theoretical model of the battery pack and its chemistry and/or e.g. estimated online using various sensor fusion methods, or similar. For example, how OCV depends on SoC may be stored in a lookup table and/or be provided as one or more functional expressions relating OCV to SoC, and similar. As envisaged herein, OCV for a particular $i$:th battery pack may depend on e.g. temperature of the battery pack, and/or may change with age of the battery pack (e.g. depend on $SoH_i$), and/or may depend on one or more other properties of the battery and its environment. As envisaged herein, exactly how to obtain the necessary parameter values is not important for the envisaged solution, as long as the parameter values may somehow be obtained with sufficient accuracy.

In some examples, the processing circuitry 210 may be further configured to communicate (e.g. by exchanging signals 242) with one or more entities 240 responsible for controlling e.g. a charging and/or discharging of the ESS 220, such as to e.g. power an electrical machine (such as an electric motor of an electric vehicle) or similar.

As envisaged herein, the computer system 200 and processing circuitry 210 may be, or form part of, a BMS. As used herein, the term BMS may be applied to management functionality for both a single battery pack as well as to that for a plurality of battery packs. A computer system as envisaged herein may be or form part of e.g. a BMU (as e.g. a Battery Management Function, BMF), a Master BMU (MBMU) responsible for managing multiple battery packs, an external vehicle management unit (such as e.g. an ESS Management Function, ESSMF), and similar. As envisaged herein, an ESS relying on battery packs for storing of energy may be referred to as a Battery ESS (BESS).

**FIG. 3** schematically illustrates a flowchart of examples of a method 300 for iteratively adapting the SoC window of the ESS 220 according to the present disclosure. The method 300 is performed by processing circuitry of a computer system, such as the processing circuitry 210 of the computer system 200.

The processing circuitry 210 is configured to obtain (as part of e.g. an operation S310 of the method 300) a target usable energy value $E_{target}$ for the ESS 220. As envisaged herein, $E_{target}$ may be predefined and set externally using e.g. a SoC window calibration parameter at a time of production of the ESS 220 (or e.g. at a time of installation of the ESS 220 into an electric vehicle, or similar), and may be defined differently for different users and/or vehicles. For example, $E_{target}$ may be defined as contractually agreed upon between e.g. a manufacturer of the vehicle, ESS 220 and/or computer system 200, and a buyer, in accordance with e.g. a usable energy commitment by the manufacturer. In other envisaged examples, $E_{target}$ may be predefined in accordance with a default specification, such as marketed to multiple users. In yet other envisaged examples, $E_{target}$ may be calculated/determined online by e.g. processing circuitry 210 in accordance with for example a predicted or actual usage pattern/behavior during vehicle operation. A "usable energy" may be defined for example as a total amount of energy (measured in e.g. kilowatt hours, kWh or Joules, J) that is deliverable/receivable from/by terminals of the ESS during e.g. driving/charging of a vehicle, while remaining inside the SoC window. The usable energy may be a nonlinear function of various battery pack/ESS characteristics such as capacity, impedance, OCV, SoC window, temperature(s), and similar.

To meet $E_{target}$ over time, as the capacity of the ESS 220 degrades over time due to aging of the battery packs 230, the processing circuitry 210 is further configured to improve (as part of e.g. an operation S320 of the method 300) a matching between $E_{target}$ and a current usable energy E of the ESS 220, wherein the current usable energy E is in accordance with a (current) SoC window of the ESS 220, such as e.g. defined by a lower limit $SoC_{winLow}$ and an upper limit $SoC_{winHigh}$ of the SoC window. The processing circuitry 210 is configured to cause such an improvement by iteratively adapting the SoC window over a plurality of iteration steps. In particular, the processing circuitry 210 is configured to, for each iteration step, update the SoC window for the ESS 220 with no more than a predefined maximum amount.

For example, adapting/updating the SoC window may include iteratively changing one or both of the lower and upper SoC window limits $SoC_{winLow}$ and $SoC_{winHigh}$.

As part of such iterative adaptation, the processing circuitry 210 may for example be configured to, for each iteration, determine (as part of e.g. an operation S322 of the method 300) that a currently usable (i.e. in accordance with the yet-to-be-updated SoC window) energy E of the ESS 220 is more than a predefined amount $\delta$ away from the target usable energy $E_{target}$. For example, to start (or continue) the iterative adaptation, it may be required that $E \geq E_{target} + |\delta|$ or that $E \leq E_{target} - |\delta|$, wherein $\delta$ may in some situations be zero. Which condition to apply may depend on context, i.e. whether E is currently larger or smaller than $E_{target}$. For example, E may be allowed to drop below $E_{target}$ with no more than $|\delta|$ before

adaptation of the SoC window is started. Likewise, E may be allowed to exceed $E_{target}$ with no more than $|\delta|$ before adaptation of the SoC window is started. Allowing E to go somewhat below $E_{target}$ may e.g. reduce the number of performed adaptations, and allowing E to go somewhat above $E_{target}$ may provide some buffer energy in case of inaccuracies and similar in parameter values. The processing circuitry 210 may be configured to change (as part of e.g. an operation S324 of the method 300) the lower limit $SoC_{winLow}$, and/or to change (as part of e.g. an operation S325 of the method 300) the upper limit $SoC_{winLow}$ of the SoC window, based on e.g. whether the currently usable (before updating) energy E is smaller or larger than $E_{target}$. If E is smaller than $E_{target} - |\delta|$, the processing circuitry 210 may decide to reduce $SoC_{winLow}$ and/or to increase $SoC_{winHigh}$ to make the usable SoC window of the ESS 220 larger, thereby increasing the amount of energy deliverable to/from the ESS 220. Likewise, if E is larger than $E_{target} + |\delta|$, the processing circuitry 210 may instead decide to increase $SoC_{winLow}$ and/or to decrease $SoC_{winHigh}$ to make the usable SoC window of the ESS 220 smaller, thereby decreasing the amount of energy deliverable to/from the ESS 220.

As envisaged herein, the processing circuitry 210 may be configured to not change the SoC window with more than the predefined maximum amount by e.g. imposing limits on a change of size of the SoC window between two subsequent iterations, by e.g. imposing limits on a change of the lower limit of the SoC window between two subsequent iterations, and/or by e.g. imposing limits on a change of the upper limit of the SoC window between two subsequent iterations.

As an example, it may be assumed that the processing circuitry 210 performs one iteration at each time $t_n = t_0 + n\Delta t$, where $t_0$ denotes some starting time for a current iterative adaptation session, where $n$ is an integer index denoting the $n$:th iteration and where $\Delta t$ denotes a time between two subsequent iterations. In what follows, $t_n$ may also be referred to as just "iteration $n$", "time $n$" or similar.

At each iteration $n$, the processing circuitry 210 has information about $E_{target}$, wherein it may in some examples be assumed that $E_{target}$ can also change with time, i.e. such that $E_{target}[n]$ denotes the value of $E_{target}$ at time $n$. As generally herein, it will be assumed that $X[n]$ is a time-dependent version of a parameter $X$, i.e. such that $X[n]$ denotes the value of $X$ at time $n$. Preferably, however, $E_{target}[n]$ is assumed to remain constant at least over several iterations, or at least change with less than some threshold value over such several iterations. The processing circuitry 210 further has (or obtains) information also about the current SoC window at time $n$ (i.e. about $SoC_{winLow}[n]$ and $SoC_{winHigh}[n]$), the current $SoH_i[n]$, and e.g. $OCV_i[n](SoC)$ (indicating that $OCV_i(SoC)$ may also be time-dependent as e.g. the temperature of the battery pack 230-i may change).

Thus, at each iteration/time $n$, the processing circuitry 210 is configured to adapt the SoC window by changing one or both of $SoC_{winLow}$ and $SoC_{winHigh}$, wherein constraints are introduced to such updates to prevent that the SoC window changes with more than a predefined maximum amount between two subsequent iterations.

For example, changing of $SoC_{winLow}$ may be constrained by a first maximum amount $\Lambda_1$, and/or changing of $SoC_{winHigh}$ may be constrained by a second maximum amount $\Lambda_2$, such that

$$\left| SoC_{winLow}[n] - SoC_{winLow}[n-1] \right| \leq \Lambda_1$$

and/or

$$\left| SoC_{winHigh}[n] - SoC_{winHigh}[n-1] \right| \leq \Lambda_2.$$

In some, but not necessarily all, examples, $\Lambda_1 = \Lambda_2$. As envisaged herein, the predefined maximum amounts may also change with time, i.e. as defined by $\Lambda_1[n]$ and $\Lambda_2[n]$, respectively. In some examples, it may also be such that there are different predefined maximum amounts with which the SoC window limits are allowed to increase compared to those with which the SoC window limits are allowed to decrease. In other examples, instead or in addition, a predefined overall maximum amount $\Lambda_3$ may be introduced to constrain the overall change of the SoC window size between two subsequent iterations, such that, for example,

$$\left| \left( SoC_{winHigh}[n] - SoC_{winLow}[n] \right) - \left( SoC_{winHigh}[n-1] - SoC_{winLow}[n-1] \right) \right| \leq \Lambda_3,$$

In some examples, instead or in addition, constraints such as $\Lambda_1$ and $\Lambda_2$ may also be used to restrict how much the SoC window is allowed to move between two subsequent iterations even if the size of the SoC window remains the same or similar.

In some examples, it may be desirable to only move the SoC window without changing its size, i.e. by imposing $\Lambda_3 = 0$. In this case, providing a "better match" between $E_{target}$ and E may include optimizing the position (and not necessarily the size) of the SoC window, as there may be multiple sets of $[SoC_{winLow}, SoC_{winHigh}]$ (i.e. multiple different SoC windows) which all provides a same usable energy E of the ESS 220. For example, for some battery pack types, it may be beneficial (in terms of stress and aging rate) to repeatedly charge and/or discharge the battery packs over one particular SoC window than over another SoC window of a same size but with different position, and similar. However, whether two SoC windows of a same size correspond to a same available energy can depend on whether the relationship between e.g. OCV and SoC is linear or not. In case of a non-linear dependence, obtaining the same available energy for two differently positioned but equisized SoC windows may not be possible. In case at least two possible SoC windows both meeting the same target usable energy value are possible, the SoC window to use may for example be selected as the SoC window that is closer to a lower side of the SoC scale than the other, if e.g. operating the ESS closer towards its lower SoC scale reduces the stress put on the ESS and its battery packs, if in line with e.g. one or more other demands from the ESS (in terms of e.g. available power, and similar).

For a given set of SoC window limits $SoC_{winLow}$ and $SoC_{winHigh}$, the processing circuitry 210 may be configured to determine the current usable energy (as bounded by the SoC window defined by such limits) as a parameter $E = f$ ($SoC_{winLow}$, $SoC_{winHigh}$, ... ), where $f()$ is some function of the SoC window limits as well as of one or more other parameters.

For example, $$E = f(SoC_{winLow}, SoC_{winHigh}, \{SoH_i\}, \{Q_i^{BoL}\}, \{OCV_i(SoC)\}, (...))$$ , i.e. the current usable energy E of the ESS 220 may be a function of at least the SoC window limits, the set of all battery pack-specific State-of-Health $\{SoH_i\}$, the set of all BoL charge storage capacities $\{Q_i^{BoL}\}$, as well as the set of all battery pack-specific mappings between OCV and SoC, $\{OCV_i(SoC)\}$. The processing circuitry 210 may be configured to calculate the current usable energy E, or $E[n]$, e.g. at least once per iteration, e.g. before and/or after the update of the SoC window.

In some examples, the processing circuitry 210 may be configured to keep the lower SoC window limit at or above a minimum lower adaptation limit $SoC_{winLow}^{min}$, i.e. such that

$$SoC_{winLow}[n] \geq SoC_{winLow}^{min},$$

where the minimum lower adaptation limit may in some examples be time-dependent, i.e. $SoC_{winLow}^{min}[n]$. In addition, or instead, the processing circuitry 210 may in some examples be configured to keep the upper SoC window limit at or below a maximum upper adaptation limit $SoC_{winHigh}^{max}$, i.e. such that

$$SoC_{winHigh}[n] \leq SoC_{winHigh}^{max},$$

where the maximum upper adaptation limit may also be time-dependent, i.e. $SoC_{winHigh}^{max}[n])$. The limit $SoC_{winLow}^{min}$ may for example correspond to a critical limit below which, in accordance to e.g. a manufacturer of the battery pack, discharging of the battery pack is not recommended. For example, in some battery pack types, an internal resistance of the battery pack may rapidly start to increase below a certain lower SoC limit (or terminal voltage), and discharging the battery pack to below such a limit may thus put unnecessary stress on the battery pack and increase its rate of aging. The limit $SoC_{winHigh}^{max}$ may for example correspond to a critical limit above which, in accordance to e.g. a manufacturer of the battery pack, charging of the battery pack is not recommended. For example, charging a battery pack to above a certain voltage may increase the risk of damage to the battery pack, and in some case result in an increased risk of fire or other hazardous situations. In addition, in case there is a fire, such a fire may be more intense and/or harder to put out if occurring at a higher SoC level of the ESS.

In some examples, the processing circuitry 210 may be configured to keep the lower SoC window limit at or below a maximum lower adaptation limit $SoC_{winLow}^{max}$, i.e. such that

$$SoC_{winLow}[n] \leq SoC_{winLow}^{max},$$

where the maximum lower adaptation limit may in some examples be time-dependent, i.e. $SoC_{winLow}^{max}[n]$. In addition, or instead, the processing circuitry 210 may in some examples be configured to keep the upper SoC window limit at or above a minimum upper adaptation limit $SoC_{winHigh}^{min}$, i.e. such that

$$SoC_{winHigh}[n] \geq SoC_{winHigh}^{min},$$

where the minimum upper adaptation limit for the upper SoC window limit may also be time-dependent, i.e. $SoC_{winHigh}^{min}[n])$. Within such limits, the usable SoC window of the ESS 220 may thus both be made smaller and larger, but also shifted up or down.

In particular, in summary of what has been described so far, the envisaged solution of the present disclosure has the advantage that the SoC window may be adapted such that the ESS 220 is always capable to deliver (or receive) an amount of energy meeting the target usable energy $E_{target}$. At the same time, limiting the amount of change to the SoC window during each iteration (as defined by e.g. $\Lambda_1$ and $\Lambda_2$, and/or $\Lambda_3$) provides the advantage that the adaptation of the SoC window can be made less intrusive/noticeable for/to a user of e.g. an electric vehicle, as large jumps in the assumed usable SoC window (such as a remaining SoC, range, or similar, displayed on a display panel of a vehicle and/or as used to perform e.g. route planning and/or other calculations) can be prevented. As an additional advantage, such iterative (instead of direct/instant) adaptation of the SoC window is more robust against inaccuracies of e.g. one or more of the readings from the battery packs 230 (and/or of one or more other parameters provided to and/or obtained by the processing circuitry 210), as there is thus a maximum limit on how much the SoC window is allowed to change in each iteration. As a consequence, the risk of propagating a larger, instantaneous error in/to such a calculation in one shot is thus reduced. Essentially, the proposed solution introduces at least some filtering and mitigates the impact of e.g. large outliers, and reduces the likelihood of large error in one step.

Optionally, the processing circuitry 210 may be configured to stop (e.g. as part of an operation S326 of the method 300) in response to determining that one or more stopping criteria are met.

One example stopping criterion may include that the usable energy $E[n]$ matches the target usable energy $E_{target}[n]$, i.e. that $E[n] = E_{target}[n]$.

Another example stopping criterion may include that the usable energy $E[n]$ exceeds the target usable energy $E_{target}[n]$ with at least a predefined buffer amount $E_{buffer}$, i.e. such that $E[n] \geq E_{target}[n] + E_{buffer}$. Such an allowed overshoot may be useful to compensate for e.g. inaccuracies (in e.g. the estimation of $E[n]$, resulting from e.g. inaccuracies in the one or more readings from the battery packs 230, and similar). For example, allowing the usable energy $E[n]$ to at least somewhat exceed the target usable energy value $E_{target}[n]$ may increase the chance of the actual usable energy E still being at least $E_{target}$ even when such accuracies are compensated for, which may provide an enhanced user experience as the risk of not being able to provide a promised amount of energy due to miscalculations and/or inaccurate readings is thereby reduced. The buffer amount may in some examples also be time-dependent, i.e. $E_{buffer}[n]$. As another example, a stopping criteria may include that the current usable energy value (as calculated based on the updated SoC window limits) is sufficiently close to the target usable energy value, i.e. that $|E[n] - E_{target}[n]| \leq \gamma_E$, where $\gamma_E$ is a parameter defining what "sufficiently" close means.

As generally envisaged herein, a solution wherein $E$ is not exactly matched to $E_{target}$, but instead to e.g. $E_{target}$ plus the buffer $E_{buffer}$, may also be considered as matching $E$ to a reconfigured target energy value $\tilde{E}_{target}$, where $\tilde{E}_{target} = E_{target} + E_{buffer}$ or similar. Thus, to improve a matching between E and $E_{target}$ may be the same as improving a matching between $E$ and $\tilde{E}_{target}$ in case it is desired to use the buffer $E_{buffer}$ or any other inequality constraint between $E$ and $E_{target}$, such that "improving a matching" includes satisfying $|E - E_{target}| \leq \Gamma$, where $\Gamma$ is some parameter allowing for a limited mismatch to still count as a (improved) matching.

Another example stopping criterion may include that both the lower and upper SoC window limits have reached (or come sufficiently close to) the respective minimum lowest and maximum highest adaptation limit, i.e. that

$$\left| SoC_{winLow}[n] - SoC_{winLow}^{min} \right| \leq \lambda_{low}^{min}$$

and

$$\left| SoC_{winHigh}[n] - SoC_{winHigh}^{max} \right| \leq \lambda_{high}^{max},$$

as the SoC window as defined by $SoC_{winLow}[n]$ and $SoC_{winHigh}$ has thus reached its maximum possible size while still respecting e.g. manufacturer-imposed critical limits, and where $\lambda_{low}^{min}$ and $\lambda_{high}^{max}$ are parameters (which may be equal and/or zero) determining what counts as "sufficiently" close.

Another example stopping criterion may include that both the maximum lower and minimum upper adaptation limit, respectively, are reached (or sufficiently close to the lower and upper SoC window limits), i.e. that

$$\left|SoC_{winLow}[n] - SoC_{winLow}^{max}\right| \le \lambda_{low}^{max}$$

and

$$\left|SoC_{winHigh}[n] - SoC_{winHigh}^{min}\right| \le \lambda_{high}^{min},$$

as the SoC window has thus instead reached a minimum possible size while still respecting these adaptation limits, and where $\lambda_{low}^{max}$ and $\lambda_{high}^{min}$ are parameters (which may be equal and/or zero) determining what counts as "sufficiently" close.

Optionally, the processing circuitry 210 may be configured to start (e.g. as part of an operation S305 of the method 300) to iteratively adapt the SoC window in response to determining that one or more starting criteria are met.

One example such starting criterion may be that it is determined that the ESS 220 is now undergoing a charging-session. Changing (i.e. adapting) the SoC window during a charging-session may be beneficial in that the user is then more likely not using/observing the ESS 220, such that changes to the SoC window as part of the adaptation will not be noticeable to the user. As a counter-example, if changing the SoC window while the user is using the ESS 220 (such as when driving the vehicle), the user may notice a sudden jump in current SoC and/or range displayed on e.g. an instrument panel, and be unsure of why such a jump occurred. This because when changing the SoC window, what corresponds to e.g. zero percent and a hundred percent SoC (as assumed by one or more entities of the vehicle responsible for charging and/or discharging the ESS 220, such as 240) may be updated as the SoC window is adapted, thus leading to such sudden changes in displayed SoC and/or remaining range capability.

As another example, the processing circuitry 210 may be configured to temporarily stop the iteration in response to determining that a charging-session has now ended, and to then resume the iteration again in response to then determining that a new charging-session has begun. Phrased differently, the processing circuitry 210 may be configured to iteratively adapt the SoC window over a plurality of different charging-sessions, which may make the change in SoC window even less noticeable to the user/driver.

In other examples, it is envisaged that the iterative adaptation is instead performed fast (in e.g. fractions of a second) at an initiation of a charging-session, in order to e.g. have less noticeable impact on e.g. remaining charging time (as displayed to a user), and similar.

As yet another example, the processing circuitry 210 may be configured to start to iteratively adapt the SoC window in response to determining (or being made aware of) that at least one battery pack of the ESS 220 has been replaced, which may lead to the SoC window being decreased instead of increased (as is otherwise usually the case due to aging of the ESS 220 and decreasing overall ESS SoH). Phrased differently, if a new (or newer) battery pack with a higher SoH is added to the ESS 220, i.e. replacing one of the older battery packs 230 of the ESS 220, the SoC window may iteratively be reduced to still match the target usable energy value $E_{target}$. The envisaged solution may also handle the opposite case, i.e. when the "new" pack replacing the old pack has a lower SoH than the old pack (e.g. when a newer but failed battery pack is replaced with an older, but working, battery pack), in which case the envisaged solution may adapt the SoC window by iteratively increasing its size.

As yet another example, the processing circuitry 210 may be configured to start the iterative adaptation of the SoC window in response to detection of a loss or an excess of energy, and may continue the iterative adaptation until e.g. one or more of the above-mentioned stopping criteria are satisfied.

In other examples, the processing circuitry 210 may be configured to start the iterative adaptation of the SoC window based on an observed usage pattern of the ESS 220. For example, if in a vehicle, the processing circuitry 210 (or any other entity sharing such data with the processing circuitry 210) may log several driving cycles of the vehicle, and if it is noted that one or more of those cycles reveal that more than a certain percentage of the usable SoC window (which may be referred to as an "energy limit" or similar) is being utilized, the processing circuitry 210 may be configured to start the iterative adaptation. The number of logged drive cycles may be determined/tuned based on e.g. usage results along with the energy limit percentage, or similar. For example, it may be determined that during Y of the last X driving cycles, the vehicle has gone down to the bottom Z percent of the usable energy. As another example, it may be determined that the vehicle has gone down to the bottom Z percent of the usable energy in the last X consecutive driving cycles. In response thereto, the processing circuitry 210 may start the iterative adaptation.

In some examples, an initial SoC window may be used as a minimum allowed SoC window, wherein the initial SoC window is defined in the ESS 220 at the time of production when the SoH of the ESS 220 and its battery packs 230 is at, or close to, a hundred percent. The processing circuitry 210 may be configured to never reduce the size of the SoC window to less than the size of the initial SoC window, which may make the solution envisaged herein more robust against inaccurate readings of battery pack parameters and similar, in addition to the robustness already provided by not changing the SoC window with more than the predefined maximum amount between subsequent iteration steps.

In some examples, the processing circuitry 210 may be configured to estimate/calculate the current usable energy $E[n]$ of the ESS 220 as a sum of battery pack-specific terms $E_i$, e.g. as

$$E[n] = \sum_{i=1}^{N} E_i[n],$$

where $E_i[n]$ indicates the amount of energy currently deliverable to/from the $i$:th battery pack given the current SoC window limits. For example, the processing circuitry 210 may be configured to calculate such terms as

$$E_i[n] = SoH_i[n] \times Q_i^{BoL} \times \int_{SoC_{winLow}[n]}^{SoC_{winHigh}[n]} OCV_i[n](SoC)\, dSoC,$$

i.e. such that

$$E[n] = \sum_{i=1}^{N} SoH_i[n] \times Q_i^{BoL} \times \int_{SoC_{winLow}[n]}^{SoC_{winHigh}[n]} OCV_i[n](SoC)\, dSoC. \qquad (1)$$

Equation (1) may also, in particular for homogenous battery packs, be used to determine which set (or sets) of lower and upper SoC window limits that would provide a particular target usable energy $E_{target}$ of the ESS 220, i.e. by changing the limits of the integral in equation (1) until the resulting $E[n]$ matches $E_{target}$. Based on this, the desired adjustments (either up or down, or none) of each of the SoC window limits may be determined. For example, in each iteration, it may be confirmed that $E_i[n-1] \leq E_{target}$, and that adjustment of the SoC window is therefore required. Starting from

$$\tilde{E}[n] = \sum_{i=1}^{N} SoH_i[n] \times Q_i^{BoL} \times \int_{L_1}^{L_2} OCV_i[n](SoC)\, dSoC, \qquad (2)$$

with $L_1$ and $L_2$ initially corresponding to $L_1 = SoC_{winLow}[n-1]$ and $L_2 = SoC_{winHigh}[n-1]$, respectively, one or both of the limits $L_1$ and $L_2$ may be increased or decreased until a difference between $\tilde{E}[n]$ and $E_{target}$ is smaller than a difference between $E[n-1]$ and $E_{target}$, taking into account the restriction of how much the SoC window (as now spanned between updated $L_1$ and $L_2$) is allowed to be changed between two subsequent iteration steps. For example, $L_1$ may be required to lie between the minimum lower adaptation limit (plus e.g. some inaccuracy reserve, $SoC_{res}$) and the maximum lower adaptation limit, and/or $L_2$ may be required to lie between the minimum upper adaptation limit and the maximum upper adaptation limit (minus e.g. some inaccuracy reserve), i.e. such that

$$SoC_{winLow}^{min} + SoC_{res} \leq L_1 \leq SoC_{winLow}^{max}$$

and

$$SoC_{winHigh}^{min} \leq L_2 \leq SoC_{winHigh}^{max} - SoC_{res}.$$

For example, $L_2$ may be changed by a predefined amount (either up or down, depending on if $E_{target}$ is above or below $E$), after which a new value for $\tilde{E}$ is recalculated, and after which it is checked whether $\tilde{E}$ now satisfies any of the herein-mentioned stopping criteria. If not yet satisfied, in a next iteration, $L_2$ may be changed again by e.g. the same predefined amount, and yet another value for $\tilde{E}$ may be recalculated and the one or more stopping criteria rechecked once again. Meanwhile, $L_1$ may for example be held fixed, if there is a preference to adjust the higher side of the SoC window and leave the lower side unchanged. The "predefined amount" with which the SoC window limit(s) is adjusted each iteration may e.g. be decided based on various factors, such as to not affect the user too much, to not allow for too high adaptation in case of inaccuracies of the parameters used for the energy calculations (e.g. using equation (1) or (2)), such as for estimation of $SoH_i$, and similar. Other factors may also contribute to how to decide upon what is the predefined amount with which to change the SoC window limit(s) each iteration. In other examples, there may be reasons to instead, or in addition, change also $L_1$.

A first initiation of the SoC window may also be based on equation (1), by specifying an initial value of either $SoC_{winLow}$ or $SoC_{winHigh}$, whereas the other one of these limits is then calculated using equation (1) or (2), e.g. with either $L_1$ or $L_2$ set to such a predefined value and the other one changed until $\tilde{E}$ matches a required usable energy setpoint (as there is thus only one variable parameter of equation (1) or (2), if assuming that $Q_i^{BoL}$ and $OCV_i(SoC)$ are known, and that $SoH_i$ e.g. corresponds to a hundred percent). The SoC window thus found may for example be used as the initial SoC window referred to above.

In some examples, the processing circuitry 210 may also be configured to take into account ohmic and entropic losses when determining the maximum dischargeable energy from each battery pack, i.e. the energy when charged to $SoC_{winHigh}$. Without losses, the dischargeable energy may take into account both capacity fade as well as power fade (e.g. increase of internal resistance), but also things like load characteristics and battery temperature. The actual maximum energy storage capacity with or without losses may be used by e.g. a multi-battery pack manager to extract what should be the battery SoC limits to fulfil the required target usable energy value. However, in the multi-battery pack scenario, the processing circuitry 210 is preferably configured to consider potential balance between different battery packs when connecting the battery packs and/or for load balancing. The multi-battery pack manager may for example decide to increase or decrease the SoC window based on individual battery pack usable energy estimates. For example, the usable energy estimate from the battery pack with the highest energy storage capacity may be used to extend/open up the SoC window for all battery packs within the ESS 220. By using the highest energy storage capacity battery pack for SoC window opening for all battery packs, a situation in which any of the battery packs (with lower energy storage capacity) would exceed the nominal energy storage capacity and thereby lead to accelerated aging/degradation of the battery packs. For at least homogenous multi-battery pack systems, using a same SoC window for all battery packs may lead to somewhat more uniform potential levels at near end charge/discharge.

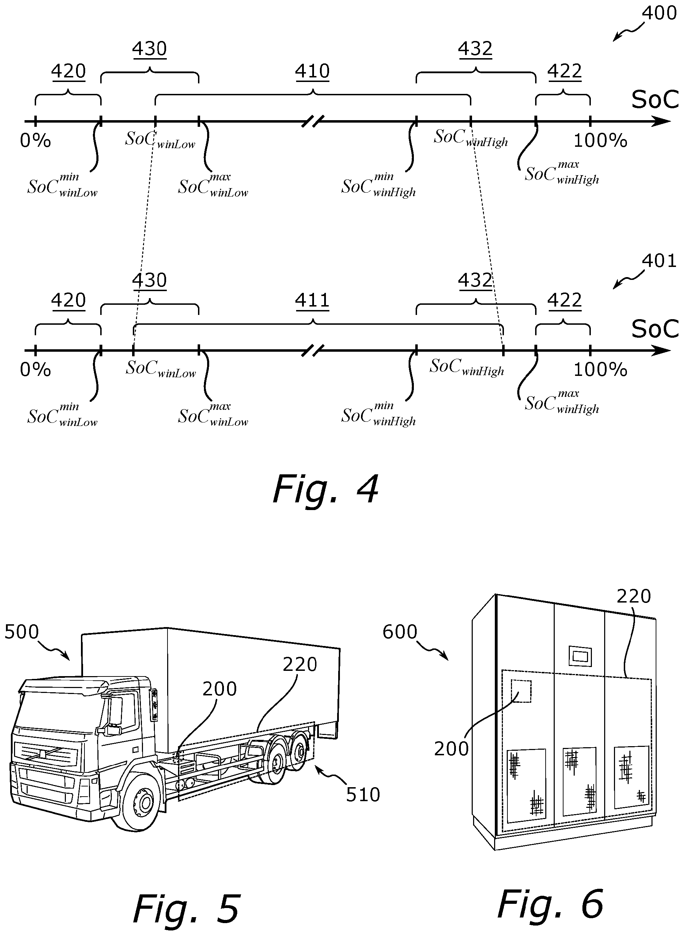

FIG. 4 schematically illustrates one or more examples of an iteratively adapted SoC window control strategy according to the present disclosure.

FIG. 4 discloses SoC windows for an ESS at two different time instances, namely a first time instance 400 at which the ESS is newer, and a second time instance 401 at which the ESS is older. For example, the first time instance 400 may correspond to a BoL of the ESS, while the second time instance is at EoL of the ESS or somewhere in between BoL and EoL of the ESS.

At the first time instance 400, a usable SoC window 410 is defined between the limits $SoC_{winLow}$ and $SoC_{winHigh}$. The ESS has a restricted lower buffer 420 and a restricted upper buffer 422, into which e.g. the manufacturer of the ESS and/or battery packs of the ESS has specified that discharging and charging of the ESS should not occur. The inner boundaries of the restrictive buffers 420 and 422 may e.g. be defined by the minimum lower and maximum upper adaptation limits $SoC_{winLow}^{min}$ and $SoC_{winHigh}^{max}$ as described herein. As part of the envisaged solution, there is also a lower adaptation buffer 430 and an upper adaptation buffer 432, i.e. such that the respective limits of the SoC window 410 lie between $SoC_{winLow}^{min}$ and $SoC_{winLow}^{max}$, and between $SoC_{winHigh}^{min}$ and $SoC_{winHigh}^{max}$, respectively, as shown in FIG. 4. The SoC window 410 may be defined as e.g. a "range buffer", and represents the SoC window meeting a usable energy requirement at e.g. a BoL of the ESS. As the ESS and its battery packs age, their SoH will decrease, and the control strategy as envisaged herein will iteratively update the SoC window, as illustrated by the second time instance 401 at the bottom of FIG. 4.

Here, the envisaged solution has increased the size of the SoC window 410 by moving the respective lower and upper SoC window limits $SoC_{winLow}$ and $SoC_{winHigh}$ further into the lower and upper adaptation buffers 430 and 432, respectively. Consequently, a resulting SoC window 411 is such that the required/target usable energy value at the SoH of the ESS at the time of 401 is still met, even though the SoH of the ESS has likely reduced compared to the situation of the first time instance 400.

**FIG. 5** schematically illustrates an example heavy(-duty) electric vehicle as envisaged herein, in form of an electric truck 500. The truck 500 includes the ESS 220 and the computer system 200 for iteratively adapting a SoC window for the ESS 220 as described herein. Such an adapted SoC window may be used to discharge/charging the ESS 220 as part of e.g. providing electric power to an electric traction 510 of the truck 500, wherein the electric traction 510 includes e.g.

at least one electrical machine (motor) for propelling the truck 500. Although illustrated herein using a truck 500, a "vehicle" as envisaged herein may be any type of electric vehicle, not necessarily limited to road vehicles. The same solution, including the use of the computer system 200, may for example be used in electric marine vessels, electric airplanes, or in any vehicle and/or vessel in which there is an ESS and a need to adaptively change the SoC window to account for e.g. ESS aging and similar.

**FIG. 6** schematically illustrates another example of an entity as envisaged herein, here in form of a battery bank 600 configured to deliver (or receive) energy to (or from) a power grid, as part of e.g. a backup- and/or ancillary service. The battery bank 600 includes the ESS 220 and the computer system 200. The battery bank 600 may for example be installed as part of the power grid itself, and/or be provided e.g. as part of a building or similar. The battery bank 600 may for example include one or more energy storage elements (such as battery packs) that have been harvested from e.g. an electric vehicle, representing so-called "second use" wherein e.g. battery packs that are no longer considered useful in electric vehicles may still be used in other, less demanding applications, such as home energy storage solutions, off-grid solutions, grid solutions, and similar. In particular, FIG. 6 and the battery bank 600 serve to illustrate that the computer system 200 (and ESS 220) as envisaged herein is not necessarily applicable only to electric (heavy-duty) vehicles, but may find use in any situation in which there is a need for improved SoC window adaptation.

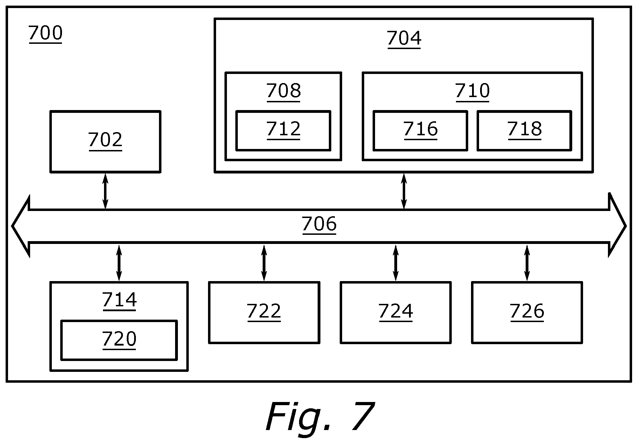

**FIG. 7** is a schematic diagram of a computer system 700 for implementing examples disclosed herein, such as for implementing the computer system 200. The computer system 700 is adapted to execute instructions from a computer-readable medium to perform these and/or any of the functions or processing described herein. The computer system 700 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include processing circuitry 702 (e.g., processing circuitry including one or more processor devices or control units, such as the processing circuitry 210), a memory 704, and a system bus 706. The computer system 700 may include at least one computing device having the processing circuitry 702. The system bus 706 provides an interface for system components including, but not limited to, the memory 704 and the processing circuitry 702. The processing circuitry 702 may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processing circuitry 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with processing circuitry 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like. Computer-code which is hard or soft coded may be provided in the form of one or more modules. The module(s) can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program 720 stored on a transitory or non-transitory computer-usable or computer-readable storage medium (e.g., single medium or multiple media), such as the storage device 714, which includes complex programming instructions (e.g., complex computer-readable program code) to cause the processing circuitry 702 to carry out actions described herein. Thus, the computer-readable program code of the computer program 720 can comprise software instructions for implementing the functionality of the examples described herein when executed by the processing circuitry 702. In some examples, the storage device 714 may be a computer program product (e.g., readable storage medium) storing the computer program 720 thereon, where at least a portion of a computer program 720 may be loadable (e.g., into a processor) for implementing the functionality of the examples described herein when executed by the processing circuitry 702. The processing circuitry 702 may serve as a controller or control system for the computer system 700 that is to implement the functionality described herein.

The computer system 700 may include an input device interface 722 configured to receive input and selections to be communicated to the computer system 700 when executing instructions, such as from a keyboard, mouse, touch-sensitive surface, etc. Such input devices may be connected to the processing circuitry 702 through the input device interface 722 coupled to the system bus 706 but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may include a communications interface 726 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence. It should also be noted that as envisaged herein, the processing circuitry configured to iteratively adapt the SoC window for e.g. a vehicle ESS may not necessarily be part of the vehicle itself, but may e.g. instead form part of a remote server/service, such as a cloud server/service. For example, as envisaged herein, such a remote server may collect (e.g. using a wireless link, such as e.g. mobile internet) the various parameters from the vehicle that are required to determine e.g. the current available energy and/or to assess the usage pattern of the ESS, and be configured to adapt the SoC window as described herein and communicate the updated SoC window limits back to the vehicle, such as after each iteration (using e.g. the same wireless link). Using a remote server/service may have the advantage that same hardware can be used to perform such adaptive updates of SoC windows for several vehicles, and/or that more hardware resources are often found in such servers than e.g. in one or more computers of a vehicle, and similar. The external server may also be configured to collect and store historical data from multiple vehicles and perform data analytics thereon, e.g. based on larger amounts of historical usage and ESS health data. New, updated/calibrated SoC window limits may be downloaded to the respective vehicle e.g. periodically, or per-demand/as triggered by a particular vehicle. In some envisaged examples, the processing circuitry (and computer system) may be distributed among both e.g. the vehicle/ESS and such a remote server, such that e.g. the vehicle can be responsible for calculating vehicle-specific parameters that are then sent to the remote server for calculating/updating the SoC window limits, which are then returned back to the vehicle, and similar. Likewise, processing circuitry and computer systems may e.g. be distributed among multiple control entities of a same ESS, such as between different levels of BMU's and/or BMS's, and similar.

In summary of all of the above, the present disclosure improves upon currently available technology in that provides an improved way of adapting a SoC window for an ESS in situations when a target usable energy changes and/or wherein an old SoC window for the ESS is no longer capable of meeting such a target usable energy value due to aging (i.e. due to decreased ESS SoH). The present disclosure proposes to change the SoC window to always meet a current target usable energy value, and in particular to perform such changes iteratively where the change of the SoC window in each iteration step is limited to at most a predetermined maximum amount. In addition to being able to meet changing target usable energy values and/or compensate for ESS aging, the proposed solution is also (due to the iterative adaptation with limited per-iteration-step changes) capable of performing such updates of the SoC window with minimized noticeability to a user, such as a driver of an electric vehicle. In addition, the iterative solution may also be gentler to the ESS and avoid faster aging of the battery packs therein, and also better handle any accuracies in readings of battery pack-specific parameters as larger errors are not allowed to propagate with more than a finite, limited amount in each iteration step. Making the adaptation depending on an estimated usage pattern of the ESS may also allow the solution to be tailored to how a particular vehicle is most often used, such that e.g. a vehicle that has frequent charging intervals (e.g. that charges a little more often) could be provided with a smaller SoC window and thus increase the lifetime of the ESS.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is an exemplifying list of examples envisaged herein:

Example 1: A computer system (200) including processing circuitry (210) configured to: - obtain a target usable energy value for an electric Energy Storage System, ESS (220), and - improve a matching between i) the target usable energy value and ii) a current usable energy value (E) of the ESS in accordance with a State-of-Charge, SoC, window for the ESS, by iteratively adapting the SoC window for the ESS over a plurality of iteration steps, wherein the processing circuitry is further configured to, for each iteration step, update the SoC window for the ESS with no more than a predefined maximum amount.

Example 2: The computer system of example 1, wherein the processing circuitry is further configured to stop the iteration in response to one or more of i) determining that the current usable energy value matches the target usable energy value and ii) determining that the current usable energy value exceeds the target usable energy value with at least a predefined buffer amount.

Example 3: The computer system of example 1 or 2, wherein the processing circuitry is further configured to keep a lower limit of the SoC window at or above a minimum lower adaptation limit, and/or wherein the processing circuitry is further configured to keep an upper limit of the SoC window at or below a maximum higher adaptation limit.

Example 4: The computer system of example 3, wherein the processing circuitry is further configured to stop the iteration in response to determining that both of the lower and upper limit of the SoC window has reached the respective minimum lower and maximum higher adaptation limit.

Example 5: The computer system of any one of the preceding examples, wherein the processing circuitry is further configured to keep a lower limit of the SoC window at or below a maximum lower adaptation limit, and/or wherein the processing circuitry is further configured to keep an upper limit of the SoC window at or above a minimum higher adaptation limit.

Example 6: The computer system of example 5, wherein the processing circuitry is further configured to stop the iteration in response to determining that both of the lower and upper limits of the SoC window has reached the respective maximum lower and minimum upper adaptation limit.

Example 7: The computer system of any one of the preceding examples, wherein the processing circuitry is configured to determine the usable energy of the ESS as a sum of battery pack-specific terms, wherein each battery pack-specific term includes a product of i) the SoH of the battery pack, ii) a Beginning-of-Life, BoL, capacity of the battery pack and iii) an integral of the estimated OCV of the battery pack over the current SoC window.

Example 8: The computer system of any one of the preceding examples, wherein the processing circuitry is configured to start to iteratively adapt the SoC window in response to the ESS undergoing a charging session.

Example 9: The computer system of any one of the preceding examples, wherein the processing circuitry is configured to start iteratively adapt the SoC window in response to a replacement of at least one battery pack of the ESS.

Example 10: The computer system of any one of the preceding examples, wherein the target usable energy value for the ESS is predefined and fixed.

Example 11: The computer system of any one of examples 1 to 10, wherein the processing circuitry is further configured to obtain an indication of an expected usage pattern for the ESS, and to determine the target usable energy value based on the obtained usage pattern.

Example 12: The computer system of any one of the preceding examples, wherein the computer system is or forms part of a Battery Management System, BMS.

Example 13: The computer system of any one of the preceding examples, wherein the processing circuitry is further configured to control a charging and/or discharging of the ESS in accordance with the adapted SoC window for the ESS.

Example 14: The computer system of any one of the preceding examples, wherein changing the SoC window with no more than the predefined maximum amount includes to not change a lower SoC window limit with more than a first predetermined maximum amount, and/or to not change an upper SoC window limit with more than a second predefined maximum amount.

Example 15: The computer system of any one of the preceding examples, wherein iteratively adapting the SoC window may include to determine that a difference between the target usable energy value and the current usable energy value exceeds a predefined threshold value, and in response thereto update the SoC window with no more than the predefined maximum amount.

Example 16: The computer system of any one of the preceding examples, wherein the processing circuitry is further configured to iteratively adapt the SoC window over several charging-sessions of the ESS.

Example 17: The computer system of example 16, wherein the processing circuitry is further configured to temporarily stop the iteration in response to detecting that an ongoing charging-session of the ESS ends, and to continue the iteration in response to detecting that a new charging-session of the ESS has started.

Example 18: The computer system of any one of the preceding examples, wherein the computer system is distributed among a coordinating multi-battery pack manager and respective processing circuitry of each battery pack, wherein the processing circuitry of each battery pack is configured to calculate its corresponding battery pack-specific term.

Example 18': The computer system of example 18, wherein the processing circuitry of each battery pack is or forms part of a BMU of/for the battery pack.

Example 18" : The computer system of example 18 or 18", wherein the coordinating multi-battery pack manager is configured to request the various parameters required to calculate the battery pack-specific terms from each battery pack, and to calculate the battery pack-specific terms on its own.

Example 19: An electric vehicle, including: - an electric Energy Storage System, ESS, including one or more battery packs, and - the computer system of any one of examples 1 to 18 for iteratively adapting a State-of-Charge, SoC, window for the ESS.

Example 20: A computer-implemented method (300) performed by processing circuitry (210) of a computer system (200), including: - obtaining (S310) a target usable energy value for an electric Energy Storage System, ESS, and - improving a matching between i) the target usable energy and ii) a current usable energy value of the ESS in accordance with a State-of-Charge, SoC, window for the ESS, by iteratively adapting (S320) the SoC window for the ESS over a plurality of iteration steps, wherein iteratively adapting the SoC window for the ESS further includes, for each iteration, updating the SoC window for the ESS with no more than a predetermined maximum amount.

Example 21: A computer program include computer code that, when executed by processing circuitry of a computer system, causes the computer system to perform the method of example 20.

Example 22: A computer program product, including a non-transitory computer-readable storage medium, on which the computer program of example 21 is stored.

Example 23: A non-transitory computer-readable storage medium, on which the computer program of example 21 is stored.

## Claims

1. A computer system (200) comprising processing circuitry (210) configured to:

- obtain a target usable energy value ($E_{target}$) for an electric Energy Storage System, ESS (220), and
- improve a matching between i) the target usable energy value and ii) a current usable energy value (E) of the ESS in accordance with a State-of-Charge, SoC, window ($[SoC_{winLow}, SoC_{winHigh}]$) for the ESS, by iteratively adapting the SoC window for the ESS over a plurality of iteration steps,

wherein the processing circuitry is further configured to, for each iteration step, update the SoC window for the ESS with no more than a predefined maximum amount.

2. The computer system of claim 1, wherein the processing circuitry is further configured to stop the iteration in response to one or more of i) determining that the current usable energy value matches the target usable energy value and ii) determining that the current usable energy value exceeds the target usable energy value with at least a predefined buffer amount.

3. The computer system of claim 1 or 2, wherein the processing circuitry is further configured to keep a lower limit ($SoC_{winLow}$) of the SoC window at or above a minimum lower adaptation limit ($SoC_{winLow}^{min}$), and/or wherein the processing circuitry is further configured to keep an upper limit ($SoC_{winHigh}$) of the SoC window at or below a maximum higher adaptation limit ($SoC_{winHigh}^{max}$).

4. The computer system of claim 3, wherein the processing circuitry is further configured to stop the iteration in response to determining that both of the lower and upper limit of the SoC window has reached or comes sufficiently close to the respective minimum lower and maximum higher adaptation limit.

5. The computer system of any one of the preceding claims, wherein the processing circuitry is further configured to keep a lower limit ($SoC_{WinLoW}$) of the SoC window at or below a maximum lower adaptation limit ($SoC_{winLow}^{max}$), and/or wherein the processing circuitry is further configured to keep an upper limit ($SoC_{winHigh}$) of the SoC window at or above a minimum higher adaptation limit ($SoC_{winHigh}^{min}$).

6. The computer system of claim 5, wherein the processing circuitry is further configured to stop the iteration in response to determining that both of the lower and upper limits of the SoC window has reached or come sufficiently close to the respective maximum lower and minimum upper adaptation limit.

7. The computer system of any one of the preceding claims, wherein the processing circuitry is configured to determine the usable energy (E) of the ESS as a sum of battery pack-specific terms ($E_i$), wherein each battery pack-specific term comprises a product of i) the SoH of the battery pack ($SoH_i$), ii) a Beginning-of-Life, BoL, capacity of the battery pack ($Q_i^{BoL}$) and iii) an integral of the estimated OCV of the battery pack ($OCV_i(SoC)$) over the current SoC window.

8. The computer system of any one of the preceding claims, wherein the processing circuitry is configured to start to iteratively adapt the SoC window in response to the ESS undergoing a charging session.

9. The computer system of any one of the preceding claims, wherein the processing circuitry is configured to start iteratively adapt the SoC window in response to a replacement of at least one battery pack of the ESS.

10. The computer system of any one of the preceding claims, wherein the target usable energy value for the ESS is predefined and fixed.

11. The computer system of any one of claims 1 to 10, wherein the processing circuitry is further configured to obtain an indication of an expected usage pattern for the ESS, and to determine the target usable energy value based on the obtained usage pattern.

12. The computer system of any one of the preceding claims, wherein the computer system is or forms part of a Battery Management System, BMS.

13. The computer system of any one of the preceding claims, wherein the processing circuitry is further configured to control a charging and/or discharging of the ESS in accordance with the adapted SoC window for the ESS.

14. An electric vehicle, comprising:

- an electric Energy Storage System, ESS, comprising one or more battery packs, and
- the computer system of any one of claims 1 to 13 for iteratively adapting a State-of-Charge, SoC, window for the ESS.

15. A computer-implemented method (300) performed by processing circuitry (210) of a computer system (200), comprising:

- obtaining (S310) a target usable energy value ($E_{target}$) for an electric Energy Storage System, ESS, and
- improving a matching between i) the target usable energy and ii) a current usable energy value (E) of the ESS in accordance with a State-of-Charge, SoC, window ([$SoC_{winLow}$, $SoC_{winHigh}$]) for the ESS, by iteratively adapting (S320) the SoC window for the ESS over a plurality of iteration steps,

wherein iteratively adapting the SoC window for the ESS further comprises, for each iteration, updating the SoC window for the ESS with no more than a predetermined maximum amount.

**Amended claims in accordance with Rule 137(2) EPC.**

1. A computer system (200) comprising processing circuitry (210) configured to:

- obtain a target usable energy value ($E_{target}$) for an electric Energy Storage System, ESS (220), and
- improve a matching between i) the target usable energy value and ii) a current usable energy value ($E$) of the ESS in accordance with a State-of-Charge, SoC, window ([$SoC_{winLow}$, $SoC_{winHigh}$]) for the ESS, by iteratively adapting the SoC window for the ESS over a plurality of iteration steps, wherein the processing circuitry is further configured to, for each iteration step, update the SoC window for the ESS with no more than a predefined maximum amount, and wherein the processing circuitry is further configured to recalculate the current usable energy of the ESS during the iterative adaptation of the SoC window.

2. The computer system of claim 1, wherein the processing circuitry is further configured to stop the iteration in response to one or more of i) determining that the current usable energy value matches the target usable energy value and ii) determining that the current usable energy value exceeds the target usable energy value with at least a predefined buffer amount.

3. The computer system of claim 1 or 2, wherein the processing circuitry is further configured to keep a lower limit ($SoC_{winLow}$) of the SoC window at or above a minimum lower adaptation limit ( $SoC_{winLow}^{min}$ ), and/or wherein the processing circuitry is further configured to keep an upper limit ($SoC_{winHigh}$) of the SoC window at or below a maximum higher adaptation limit ( $SoC_{winHigh}^{max}$ ).

4. The computer system of claim 3, wherein the processing circuitry is further configured to stop the iteration in response to determining that both of the lower and upper limit of the SoC window has reached or comes sufficiently close to the respective minimum lower and maximum higher adaptation limit.

5. The computer system of any one of the preceding claims, wherein the processing circuitry is further configured to keep a lower limit ($SoC_{winLow}$) of the SoC window at or below a maximum lower adaptation limit ( $SoC_{winLow}^{max}$ ), and/or wherein the processing circuitry is further configured to keep an upper limit ($SoC_{winHigh}$) of the SoC window at or above a minimum higher adaptation limit ( $SoC_{winHigh}^{min}$ ).

6. The computer system of claim 5, wherein the processing circuitry is further configured to stop the iteration in response to determining that both of the lower and upper limits of the SoC window has reached or come sufficiently close to the respective maximum lower and minimum upper adaptation limit.

7. The computer system of any one of the preceding claims, wherein the processing circuitry is configured to determine the usable energy ($E$) of the ESS as a sum of battery pack-specific terms ($E_i$), wherein each battery pack-specific term comprises a product of i) the SoH of the battery pack ($SoH_i$), ii) a Beginning-of-Life, BoL, capacity of the battery pack ($Q_i^{BoL}$) and iii) an integral of the estimated OCV of the battery pack ($OCV_i(SoC)$) over the current SoC window.

8. The computer system of any one of the preceding claims, wherein the processing circuitry is configured to start to iteratively adapt the SoC window in response to the ESS undergoing a charging session.

9. The computer system of any one of the preceding claims, wherein the processing circuitry is configured to start iteratively adapt the SoC window in response to a replacement of at least one battery pack of the ESS.

10. The computer system of any one of the preceding claims, wherein the target usable energy value for the ESS is predefined and fixed.

11. The computer system of any one of claims 1 to 10, wherein the processing circuitry is further configured to obtain an indication of an expected usage pattern for the ESS, and to determine the target usable energy value based on the obtained usage pattern.

12. The computer system of any one of the preceding claims, wherein the computer system is or forms part of a Battery Management System, BMS.

13. The computer system of any one of the preceding claims, wherein the processing circuitry is further configured to control a charging and/or discharging of the ESS in accordance with the adapted SoC window for the ESS.

14. An electric vehicle, comprising:

   - an electric Energy Storage System, ESS, comprising one or more battery packs, and
   - the computer system of any one of claims 1 to 13 for iteratively adapting a State-of-Charge, SoC, window for the ESS.

15. A computer-implemented method (300) performed by processing circuitry (210) of a computer system (200), comprising:

   - obtaining (S310) a target usable energy value ($E_{target}$) for an electric Energy Storage System, ESS, and
   - improving a matching between i) the target usable energy and ii) a current usable energy value (E) of the ESS in accordance with a State-of-Charge, SoC, window ($[SoC_{winLow}, SOC_{winHign}]$) for the ESS, by iteratively adapting (S320) the SoC window for the ESS over a plurality of iteration steps,

   wherein iteratively adapting the SoC window for the ESS further comprises, for each iteration, updating the SoC window for the ESS with no more than a predetermined maximum amount, and recalculating the current usable energy of the ESS during the iterative adaptation of the SoC window.

100

110

SoC

0%  $SoC_{winLow}$  $SoC_{winHigh}$  100%

## Fig. 1

210

242

200

240

220  234-1  234-N

234-i

234-2

230-1

232-1

230-2

232-2

230-i

232-i

230-N

232-N

## Fig. 2

300

S305

S310

S320

S322

S324/S325

S326

## Fig. 3

Fig. 4

Fig. 5

Fig. 6

700

704

708

702

712

710

716 718

706

714

720

722 724 726

# Fig. 7

Europäisches
Patentamt

European
Patent Office

Office européen
des brevets

# EUROPEAN SEARCH REPORT

**Application Number**

EP 24 17 2430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/105947 A1 (CHANG XIAOGUANG [US] ET AL) 16 April 2015 (2015-04-16)<br>* paragraphs [0024] - [0066]; figures 1-8b * | 1-15 | INV.<br>B60L58/13 |
| X | WO 2019/120570 A1 (VOLVO TRUCK CORP [SE]) 27 June 2019 (2019-06-27)<br>* paragraphs [0121] - [0124] * | 1-15 | |
| A | EP 3 398 818 A1 (VOLVO CAR CORP [SE]) 7 November 2018 (2018-11-07)<br>* the whole document * | 1-15 | |
| A | EP 4 293 639 A1 (VOLVO TRUCK CORP [SE]) 20 December 2023 (2023-12-20)<br>* the whole document * | 1-15 | |
| A | WO 2021/004599 A1 (VOLVO TRUCK CORP [SE]) 14 January 2021 (2021-01-14)<br>* the whole document * | 1-15 | |

**TECHNICAL FIELDS SEARCHED (IPC)**

H02J
B60L

The present search report has been drawn up for all claims

| Place of search | Date of completion of the search | Examiner |
|---|---|---|
| Munich | 11 October 2024 | Hunckler, José |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 17 2430

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2024

| Patent document cited in search report | | | Publication date | Patent family member(s) | | | Publication date |
|---|---|---|---|---|---|---|---|
| US 2015105947 | A1 | | 16-04-2015 | CN | 104553837 | A | 29-04-2015 |
| | | | | DE | 102014220052 | A1 | 16-04-2015 |
| | | | | US | 2015105947 | A1 | 16-04-2015 |
| | | | | US | 2016257217 | A1 | 08-09-2016 |
| WO 2019120570 | A1 | | 27-06-2019 | CN | 111491823 | A | 04-08-2020 |
| | | | | EP | 3727925 | A1 | 28-10-2020 |
| | | | | KR | 20200098677 | A | 20-08-2020 |
| | | | | US | 2020406782 | A1 | 31-12-2020 |
| | | | | WO | 2019120570 | A1 | 27-06-2019 |
| | | | | WO | 2019122198 | A1 | 27-06-2019 |
| EP 3398818 | A1 | | 07-11-2018 | CN | 108791134 | A | 13-11-2018 |
| | | | | EP | 3398818 | A1 | 07-11-2018 |
| | | | | US | 2018323638 | A1 | 08-11-2018 |
| EP 4293639 | A1 | | 20-12-2023 | EP | 4293639 | A1 | 20-12-2023 |
| | | | | US | 2023406151 | A1 | 21-12-2023 |
| WO 2021004599 | A1 | | 14-01-2021 | CN | 114072685 | A | 18-02-2022 |
| | | | | EP | 3994029 | A1 | 11-05-2022 |
| | | | | US | 2022365139 | A1 | 17-11-2022 |
| | | | | WO | 2021004599 | A1 | 14-01-2021 |
| | | | | WO | 2021004961 | A1 | 14-01-2021 |

EPO FORM P0459

For more details about this annex : see Official Journal of the European Patent Office, No. 12/82